# EUROPEAN PATENT APPLICATION

(11) **EP 4 682 626 A1**
(43) Date of publication of application: **21.01.2026**
(21) Application number: 23927027.5
(22) Date of filing: 18.08.2023
(51) Int. Cl.: G02F 1/16755, G09G 3/34, G02F 1/133

(54) **ELECTRONIC PAPER SCREEN, ELECTRONIC PAPER DISPLAY, AND ELECTRONIC TERMINAL**

(30) Priority: 13.03.2023 CN 202320527620 U
(71) Applicant: Hanshow Technology Co., Ltd., Jiaxing, Zhejiang 314031 (CN)
(72) Inventor: LI, Yanchen, Jiaxing, Zhejiang 314031 (CN); WU, Zhaoyun, Jiaxing, Zhejiang 314031 (CN); ZHAO, Jianguo, Jiaxing, Zhejiang 314031 (CN); HOU, Shiguo, Jiaxing, Zhejiang 314031 (CN)
(74) Representative: Boult Wade Tennant LLP
(86) International application number: PCT/CN2023/113743
(87) International publication number: WO 2024/187681

(57) **Abstract**

An electronic paper screen, an electronic paper display and an electronic terminal, relating to the technical field of electronic display. The electronic paper screen includes a thin-film transistor substrate (1), an electronic paper film (2) and an electrical connection point (14). The thin-film transistor substrate (1) includes a polygonal display area (11) with at least one corner reserved with a vacant area. Each vacant area is defined by a first regional boundary (8). The electrical connection point (14) is disposed on the electronic paper film (2) at a position corresponding to the vacant area and configured to connect an electrode on the thin-film transistor substrate (1) to an electrode on the electronic paper film (2). An outer contour of the electrical connection point (14) forms a second regional boundary (9) on a plane of the thin-film transistor substrate (1). A portion of the second regional boundary (9) corresponding to the first regional boundary (8) is an equidistant portion. A minimum distance from any point on the equidistant portion to the first regional boundary (8) is equal. The loss of the display area of the display area (11) is reduced by the limit that the minimum distance is equal..

## Description

### RELATED APPLICATION

The present disclosure claims priority to Chinese Patent Application No. 202320527620.5 filed on March 13, 2023, which is hereby incorporated by reference in its entirety.

### TECHNICAL FIELD

The present disclosure relates to the field of electronic display technologies, and particularly to an electronic paper screen.

### BACKGROUND

Electronic paper screen is a type of display screen manufactured using electrophoretic display technology, and achieves image display by applying driving voltages to each pixel through a control circuit on a thin-film transistor (TFT) substrate.

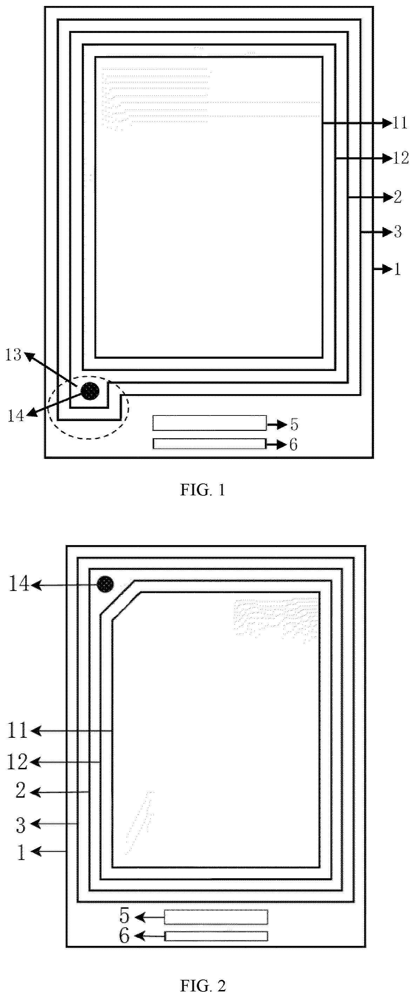

As illustrated in FIG. 1, the display area 11 (referred to as AA area) of the existing electronic paper screen is rectangular, and a transition area 12 (referred to as Border area) surrounding the display area 11 may be disposed outside the display area 11. In order to drive the electrode (e.g., the VCOM ITO electrode) on the electronic paper film 2 (referred to as FPL, it is necessary to extend part of the electronic paper film 2 outward to reserve an ear hole 13. An electrical connection point 14 (e.g., an Ag glue dot) is then disposed in the ear hole 13. Afterwards, the electrode (e.g., a VCOM electrode) on the thin-film transistor substrate 1 is connected to the electrode (e.g., the VCOM ITO electrode) on the electronic paper film 2 by dotting Ag glue. However, the presence of the ear hole 13 results in an irregular shape for both the electronic paper film 2 and the protective film 3 (referred to as PS, which is attached to the electrophoretic film). This also leads to an increase in the dimensions of the thin-film transistor substrate 1, the electronic paper film 2 and the protective film 3. This not only widens the bezel of the electronic paper screen and reduces its screen-to-body ratio, but also decreases the cut number for the thin-film transistor substrate 1, the electronic paper film 2 and the protective film 3 of the electronic paper screen (In the raw material production process, to improve efficiency and reduce costs, the thin-film transistor substrate 1, the electronic paper film 2 and the protective film 3 are cut from large pieces or mother sheets; one large piece or mother sheet is divided into several small pieces, with each small piece being the required size and shape for an actual electronic paper screen, and the cut number refers to the maximum number of small pieces that can be arranged and cut from one large piece). This decrease in cut number leads to increased material costs.

In order to solve the above problems caused by the ear hole, as illustrated in FIG. 2, a corner-missing design can be applied to the display area 11, specifically notching one or more corners of four corners of the display area 11, while setting the electrical connection points 14 on the electronic paper film 2 at positions corresponding to one or several of the notched corners. This design allows for the elimination of the ear hole 13.

While the corner-missing design solves the problems of the irregular shape of the electronic paper film, the reduction of the screen-to-body ratio of the electronic paper screen, and the increased costs caused by the ear hole, it simultaneously leads to a loss of display area. Therefore, for this situation, it is necessary to optimize and improve the corner-missing design to reduce the loss of display area.

### SUMMARY

The present disclosure aims to provide an electronic paper screen, an electronic paper display, and an electronic terminal. The electronic paper screen can reduce the loss of display area by optimizing the corner-missing design.

To achieve the above objective, the present disclosure adopts the following technical solutions.

Embodiments of a first aspect of the present disclosure provide an electronic paper screen, including a thin-film transistor substrate, an electronic paper film and an electrical connection point. The thin-film transistor substrate includes a polygonal display area with at least one corner reserved with a vacant area. Each vacant area is defined by a first regional boundary. The electrical connection point is disposed on the electronic paper film at a position corresponding to the vacant area and configured to connect an electrode on the thin-film transistor substrate to an electrode on the electronic paper film. An outer contour of the electrical connection point forms a second regional boundary on a plane of the thin-film transistor substrate. A portion of the second regional boundary corresponding to the first regional boundary is an equidistant portion. A minimum distance from any point on the equidistant portion to the first regional boundary is equal.

Further, the first regional boundary is arc-shaped, and the equidistant portion is correspondingly configured as an arc segment.

Further, the second regional boundary is a closed shape including a curved segment and the arc segment, and a curvature of the curved segment is the same as or different from that of the arc segment.

Further, the second regional boundary is a closed shape including a straight-line segment and the arc segment.

Further, the first regional boundary is a straight line or a polyline. The equidistant portion is a straight-line segment corresponding to the straight line, or a straight-line segment structure formed by a plurality of straight-line segments sequentially connected end-to-end and corresponding to the polyline.

Further, the second regional boundary is a polygon including the straight-line segment or the straight-line segment structure.

Further, the second regional boundary is a closed shape including the straight-line segment and a curved segment or including the straight-line segment structure and a curved segment.

Further, the first regional boundary is a mixed shape including a straight line and an arc line, or including a polyline and an arc line. The equidistant portion is a mixed segment corresponding to the mixed shape, and the second regional boundary is a closed shape including the mixed segment.

Further, the second regional boundary is located inside the electronic paper film, so that there is a spacing between the second regional boundary and a boundary of the electronic paper film, thereby preventing the electrical connection points 14 from overflowing beyond the electronic paper film due to process fluctuation.

Further, the second regional boundary is a closed shape formed based on a boundary of the electronic paper film, so that a part of the boundary of the electronic paper film constitutes a part of the second regional boundary, thereby minimizing the loss of the display area.

Further, the minimum distance between the equidistant portion and the first regional boundary is L1, which satisfies 0.5 mm ≤ L1 ≤ 3 mm, and a minimum distance between the second regional boundary and a boundary of the electronic paper film is L2, which satisfies 0 mm ≤ L2 ≤ 1 mm. The distance L1 is set to isolate the electrical connection point from the display area, so as to prevent edge damage to the electrophoretic film caused by laser cutting at the electrical connection point, which could otherwise lead to electronic ink entering the display area during use.

Further, a transition area is disposed around the display area, a minimum width of the transition area is L3, which satisfies 0 mm ≤ L3 ≤ 1 mm, a minimum distance between the second regional boundary and a boundary of the transition area is L4, which satisfies 0.3 mm ≤ L4 ≤ 2 mm, and it is ensured that 0.5 mm ≤ L3+L4 ≤ 3 mm. The distance L4 is set to isolate the electrical connection point from the transition area, so as to prevent unintended contact between the electrical connection point and the electrode of the transition area, and also prevent edge damage to the electronic paper film caused by laser cutting at the electrical connection point, which could otherwise lead to electronic ink entering the transition area during use. The distances L3 and L4 are set to isolate the electrical connection point from the display area, so as to prevent edge damage to the electronic paper film caused by laser cutting at the electrical connection point, which could otherwise lead to electronic ink entering the display area during use.

Further, the electronic paper screen further includes a protective film attached to the electronic paper film, and a minimum distance between a boundary of the electronic paper film and a boundary of the protective film is L5, which satisfies 0.5 mm ≤ L5 ≤ 2 mm. The distance L5 is set for a sealing connector including an edge sealing adhesive which bonds the edge of the protective film to the thin-film transistor substrate to prevent moisture from entering the electronic paper film.

Embodiments of a second aspect of the present disclosure provide an electronic paper display, which includes the afore-mentioned electronic paper screen.

Embodiment of a third aspect of the present disclosure provide an electronic terminal, which includes the afore-mentioned electronic paper display.

Special clarification in this document:

The "electrical connection point" refers to its functional capability for establishing electrical connectivity, for example, electrically connecting the electrode on the thin-film transistor substrate to the electrode on the electronic paper film. It does not imply that the physical form of the electrical connection point must be a specific shape, such as a "point".

In the phrase "a portion of the second regional boundary corresponding to the first regional boundary", the "corresponding portion" refers to the following:: connecting two endpoints of the second regional boundary to obtain a first connection line; drawing a second connection line perpendicular to the first connection line through a midpoint of the first connection line; taking an endpoint of one end of the first regional boundary as a starting point to draw a first ray toward the second regional boundary, where the first ray and the second regional boundary intersect at a first intersection point closest to the endpoint of the first regional boundary; drawing a second ray corresponding to the first ray, where the first ray and the second ray are symmetric with respect to the second connection line; similarly, the second ray and the second regional boundary are also intersect at a second intersection point closest to the endpoint of the first regional boundary. The portion of the second regional boundary facing the first regional boundary and located between the first intersection point and the second intersection point is the corresponding portion, also referred to as the equidistant portion.

The present disclosure has the following advantageous effects.
1) The portion of the second regional boundary corresponding to the first regional boundary is an equidistant portion, and the minimum distance from any point on the equidistant portion to the first regional boundary is equal, so as to reduce the loss of the display area.
2) The loss of the display area of the display area is further reduced by changing the position of the second regional boundary relative to the electronic paper film.
3) The loss of the display area of the display area is reduced by limiting the positions, dimensions and distances of a plurality of structural elements.

### BRIEF DESCRIPTION OF DRAWINGS

For a clearer illustration of technical features in the embodiments of the present disclosure or the prior art, a brief description of the drawings for the embodiments or the prior art will be given below. The drawings described below involve only some embodiments of this disclosure. For those of ordinary skill in the art, other drawings can be derived from these drawings without any inventive efforts. In the drawings:
FIG. 1 is a schematic plan view of an electronic paper screen provided with an ear hole;
FIG. 2 is a schematic plan view of an electronic paper screen with the ear hole removed;
FIGS. 3a1 and 3b1 are schematic plan views of an electronic paper screen according to an embodiment of the present disclosure;

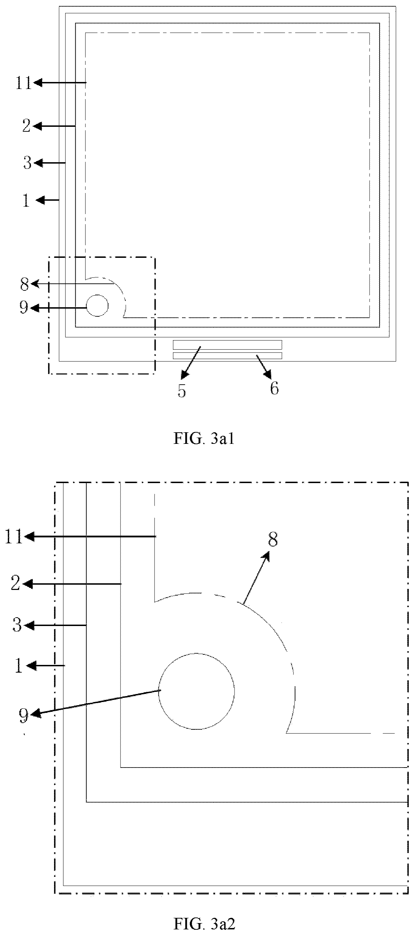

FIGS. 3a2 and 3b2 are partial enlarged schematic views of FIGS. 3a1 and 3b1, respectively;

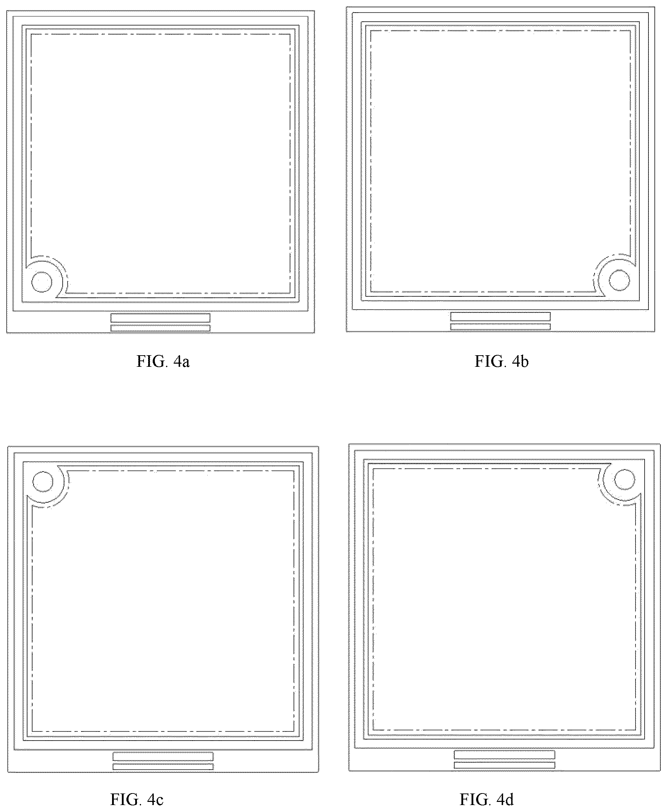

FIGS. 4a to 4d are schematic diagrams showing several arrangements of a vacant area according to an embodiment of the present disclosure;

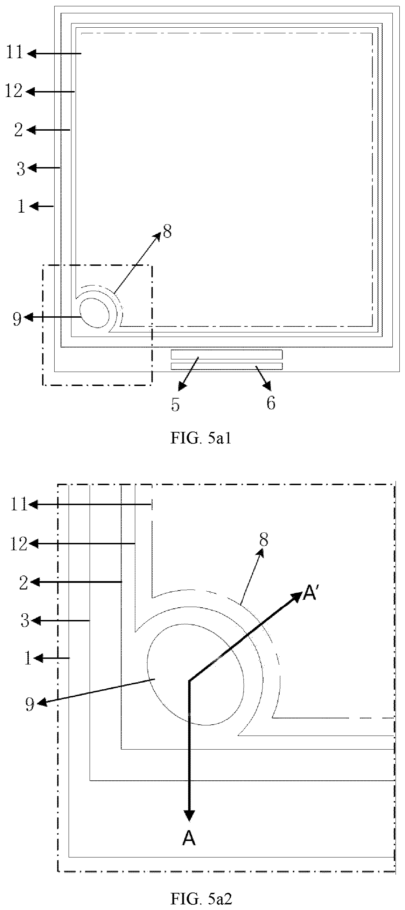

FIGS. 5a1, 5b1, 5c1 and 5d1 are schematic diagrams showing several shapes of a first regional boundary and a second regional boundary according to Embodiment 1 of the present disclosure;
FIGS. 5a2, 5b2, 5c2 and 5d2 are partial enlarged schematic views of FIGS. 5a1, 5b1, 5c1 and 5d1, respectively;

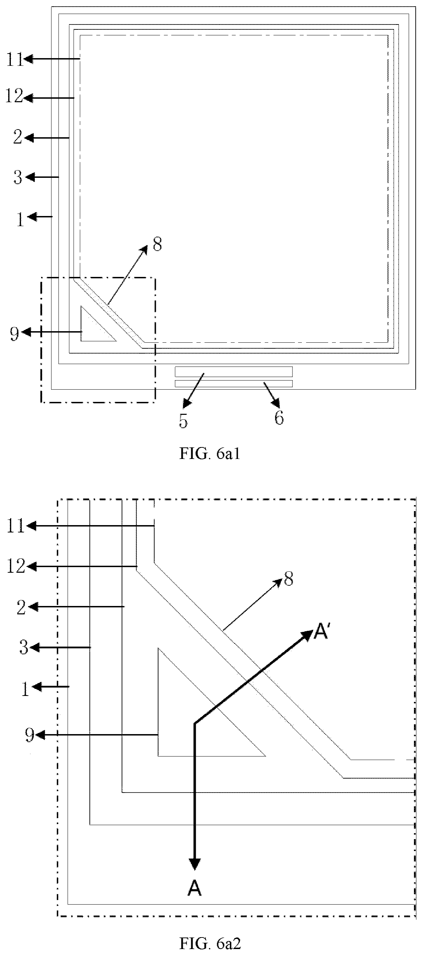

FIGS. 6a1, 6b1, 6c1 and 6d1 are schematic diagrams showing several shapes of a first regional boundary and a second regional boundary according to Embodiment 2 of the present disclosure;
FIGS. 6a2, 6b2, 6c2 and 6d2 are partial enlarged schematic views of FIGS. 6a1, 6b1, 6c1 and 6d1, respectively;

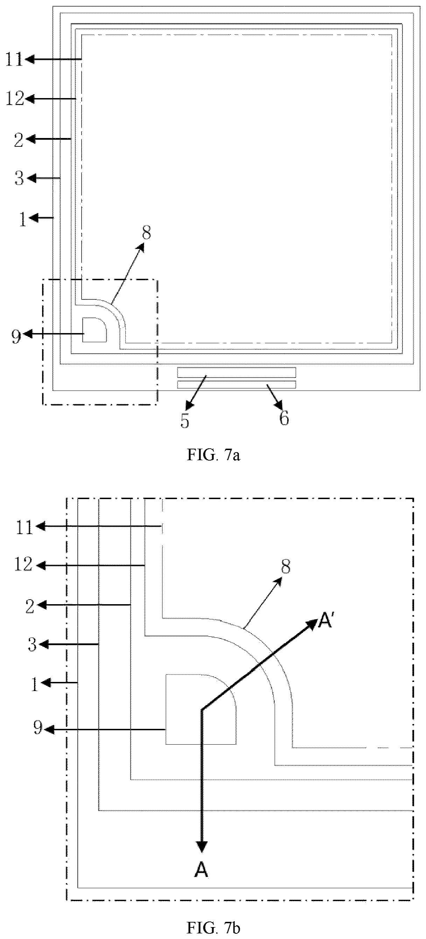

FIG. 7a is a schematic diagram showing a shape of a first regional boundary and a second regional boundary according to Embodiment 3 of the present disclosure;
FIG. 7b is a partial enlarged schematic view of FIG. 7a;

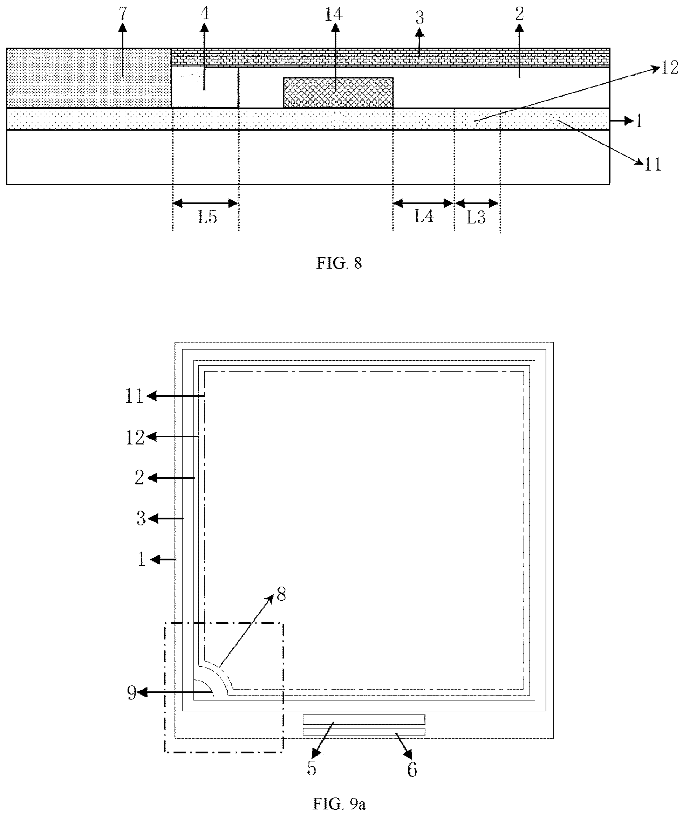

FIG. 8 is a cross-sectional view taken along line A-A' of FIG. 7b according to Embodiment 4 of the present disclosure;
FIG. 9a is a schematic diagram showing a structure where a part of an edge of an electronic paper film constitutes a part of a second regional boundary according to Embodiment 5 of the present disclosure;

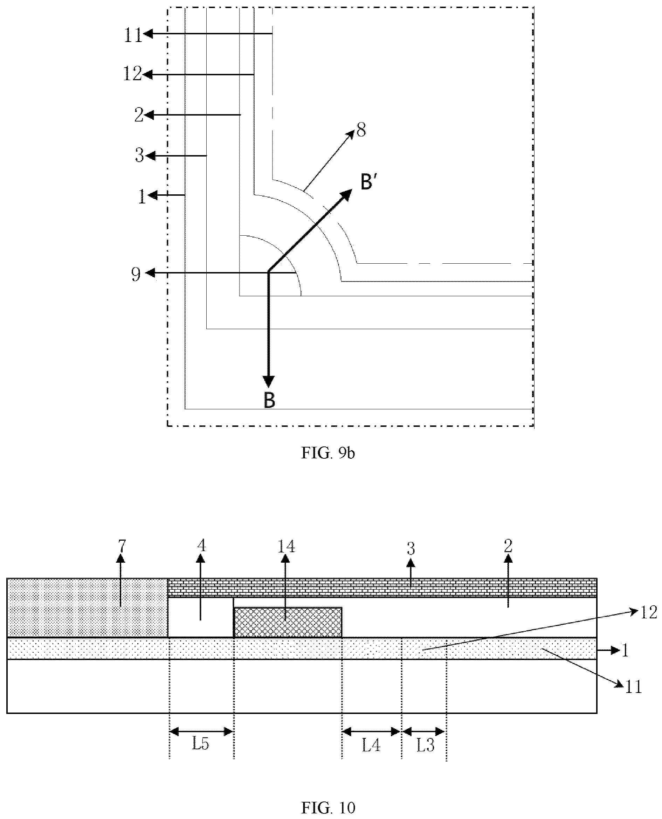

FIG. 9b is a partial enlarged schematic view of FIG. 9a; and
FIG. 10 is a cross-sectional view taken along line B-B' of FIG. 9b.

In the drawings:
1: thin-film transistor substrate; 11: display area; 12: transition area; 13: ear hole; 14: electrical connection point; 2: electronic paper film; 3: protective film; 4: edge sealing adhesive; 5: driving chip; 6: flexible printed circuit board; 7: silica gel; 8: first regional boundary; 9: second regional boundary.

### DESCRIPTION OF EMBODIMENTS

In the description of the present disclosure, it should be understood that the terms indicating orientations or positional relationships are based on those illustrated in the drawings, and are only for the convenience of describing the present disclosure and simplifying the description, rather than indicating or implying that a referred device or element must have a specific orientation, or be constructed and operated in a specific orientation, and should not be construed as limitations to the present disclosure. The terms "first" and "second" are only used for descriptive purposes and should not be construed as indicating or implying relative importance or implicitly specifying the number of the indicated technical features. Thus, a feature defined with "first" or "second" may explicitly or implicitly include one or more of such features. The term "polygonal" refers to three or more sides, and both "a plurality of" and "multiple segments" both refer to two or more.

The principles and the features of the present disclosure are described below with reference to the drawings, and the examples given are only used to explain the present disclosure, rather than limiting the scope thereof. It should be noted that all the drawings are in a very simplified form and use non-precise scales, and are only used to conveniently and clearly illustrate the objectives of the embodiments of the present disclosure.

Before describing the embodiments of the present application, a brief overview of the overall structure of an electronic paper screen is provided to facilitate a better and clearer understanding of the innovative aspects of the present application.

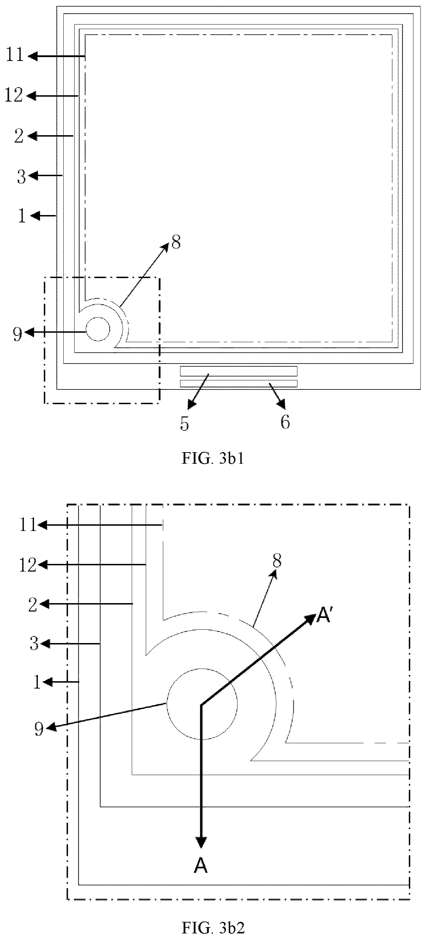

As illustrated in FIGS. 3a1 and 3a2 or FIGS. 3b1 and 3b2, the electronic paper screen includes a thin-film transistor substrate 1 (abbreviated as TFT substrate), an electronic paper film 2 (abbreviated as FPL), a protective film 3 (abbreviated as PS), a driving chip 5 (abbreviated as IC), and a flexible printed circuit board 6 (abbreviated as FPC).

The thin-film transistor substrate 1 includes a display area 11 (abbreviated as AA area) and a non-display area (abbreviated as non-AA area). In some products, an annular area, with a certain width and referred to as a transition area 12 (abbreviated as Border area), is disposed between the display area 11 and the non-display area. The transition area 12serves to separate the display area 11 and the non-display area. The minimum distance from any point on a boundary of the transition area 12 to a first regional boundary 8 is equal.

The electronic paper film 2 is configured to display an image actually seen by human eyes. The electronic paper film 2 is attached to the thin-film transistor substrate 1, and covers the display area 11 and the transition area 12 (typically, the edge of the electronic paper film 2 is located outside the transition area 12). An electrode (e.g., a VCOM electrode) on the thin-film transistor substrate 1 is connected to an electrode (e.g., a VCOM ITO electrode) on the electronic paper film 2 through an electrical connection point 14 (e.g., an Ag glue dot), thereby enabling the driving of the electrode on the electronic paper film 2.

The protective film 3 mainly includes a waterproof layer and an anti-glare layer. The protective film 3 is hermetically connected to the thin-film transistor substrate 1 through a sealing connector (e.g., an edge sealing adhesive 4) and attached to the electronic paper film 2. By bonding the edge of the protective film 3 to the thin-film transistor substrate 1, it prevents glare and blocks moisture, preventing moisture from entering the electronic paper film 2.

The flexible printed circuit board 6 and the driving chip 5 are typically disposed in a lower border area of the thin-film transistor substrate 1, and sealed with sealing connectors (e.g., silicone gel 7). The flexible printed circuit board 6 is configured to connect an external circuit to the electronic paper screen, enabling signal transmission between them. The driving chip 5 is configured to receive a signal transmitted by the external circuit through the flexible printed circuit board 6, and convert the signal into a voltage and timing for refreshing the electronic paper screen. The flexible printed circuit board 6 and the driving chip 5 are disposed on the thin-film transistor substrate 1, for example, by being soldered onto the thin-film transistor substrate 1 using silicone gel 7 and hot pressing.

Based on the above understanding of the overall structure of electronic paper screen, in an embodiment of the present disclosure, the explanation takes an example where the display area 11 is a quadrangle with a vacant area only reserved at a lower left corner. It should be noted that in other embodiments, the display area 11 may also be a polygon other than the quadrangle, and the number and location of the vacant area(s) are not limited. For example, for the quadrangular display area 11, as illustrated in FIGS. 4a to 4d, a vacant area may be reserved at any one, or any two or more, of an upper left corner, a lower left corner, an upper right corner and a lower right corner. The number of the electrical connection points 14 affects the driving capability for the electrode, i.e., more electrical connection points 14 lead to better driving capability of the thin-film transistor substrate 1 for the electrode on the electronic paper film 2. However, the number of the electrical connection points 14 also affects the cut number of the electronic paper film 2 and the consumption of electrical connection material, i.e., more electrical connection points 14 result in smaller cut number of the electronic paper film 2 and increased consumption of the electrical connection material. In short, from a product performance perspective, two electrical connection points 14 are superior to a single electrical connection point 14, while from a cost perspective, a single electrical connection point 14 is superior to two electrical connection points 14. In order to balance the performance and the cost, electronic paper films 2 with a size below 3.5 inches typically employ a single electrical connection point 14, while those with a size of 3.5 inches or more generally utilize two or more electrical connection points 14.

As illustrated in FIGS. 3a1 and 3a2 or FIGS. 3b1 and 3b2, the electronic paper screen includes a thin-film transistor substrate 1, an electronic paper film 2 and an electrical connection point 14. The thin-film transistor substrate 1 has a quadrangular display area 11, with a vacant area reserved at a lower left corner and defined by a first regional boundary 8 on the display area 11. The electrical connection point 14 is disposed on the electronic paper film 2 at a position corresponding to the vacant area, and configured to connect an electrode on the thin-film transistor substrate 1 and an electrode on the electronic paper film 2. An outer contour of the electrical connection point 14 forms a second regional boundary 9 on a plane of the thin-film transistor substrate 1. A portion of the second regional boundary 9 corresponding to the first regional boundary 8 is an equidistant portion, and a minimum distance from any point on the equidistant portion to the first regional boundary 8 is equal.

The only distinction between FIG. 3b1 and FIG. 3a1 is that FIG. 3b1 further includes a transition area 12 between the display area 11 and the non-display area. Based on the previous description, it can be understood that the transition area 12 is a conventional optional configuration, and the boundary of the transition area 12 is parallel to the first regional boundary 8, that is, the presence of the transition area 12 does not affect the present technology. Therefore, in this embodiment, the structure shown in Figure 3b1, which incorporates more structural elements, is adopted as the basis for explanation to provide a more detailed description.

### Embodiment 1

This embodiment provides a feasible solution for ensuring that the minimum distance from any point on the equidistant portion to the first regional boundary 8 is equal.

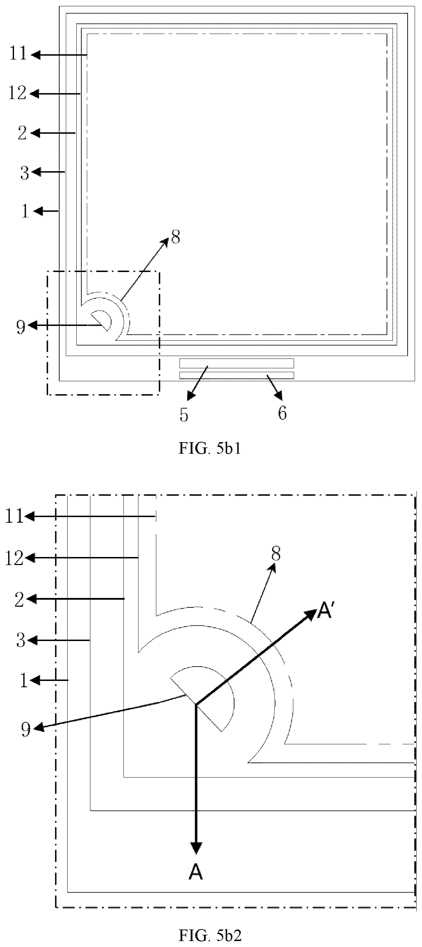

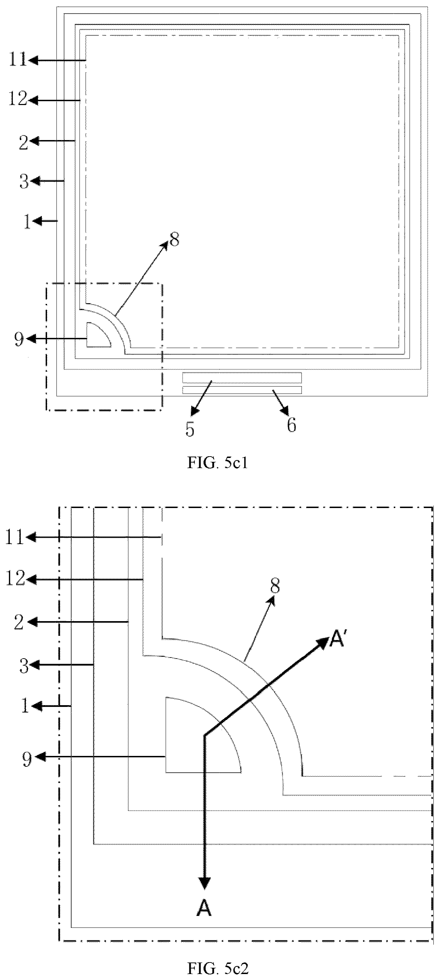

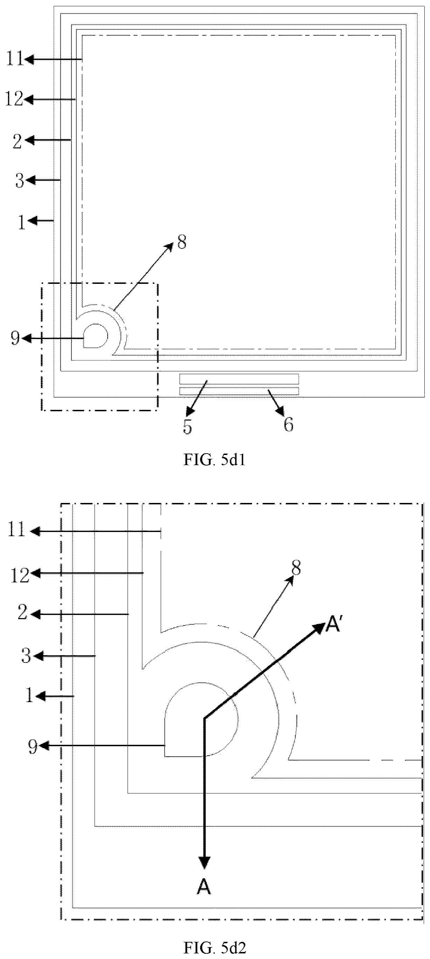

The first regional boundary 8 is arc-shaped, and the equidistant portion is correspondingly configured as an arc segment. It can be seen that the second regional boundary 9 is a regular or irregular closed shape including the arc segment. This can be further refined as follows: 1) the second regional boundary 9 may be an closed shape including a curved segment and the arc segment, and the curvature of the curved segment may be the same as or different from that of the arc segment, such as a perfect circle (as shown in FIG. 3a1, FIG. 3b1, FIG. 4a, FIG. 4b, FIG. 4c or FIG. 4d) or a non-perfect circle like an ellipse (as shown in FIGS. 5a1 and 5a2); 2) the second regional boundary 9 may be an closed shape including a straight-line segment and the arc segment, including but not limited to a semicircle (as shown in FIGS. 5b1 and 5b2), a sector (as shown in FIGS. 5c1 and 5c2) and a teardrop shape (as shown in FIGS. 5d1 and 5d2, where the arc segment is a major arc, and the teardrop shape is composed of the major arc and two straight-line segments intersected at an acute angle). It should be noted that a polyline segment is considered as being formed by multiple straight-line segments connected end-to-end sequentially.

### Embodiment 2

This embodiment provides another feasible solution for ensuring that the minimum distance from any point on the equidistant portion to the first regional boundary 8 is equal.

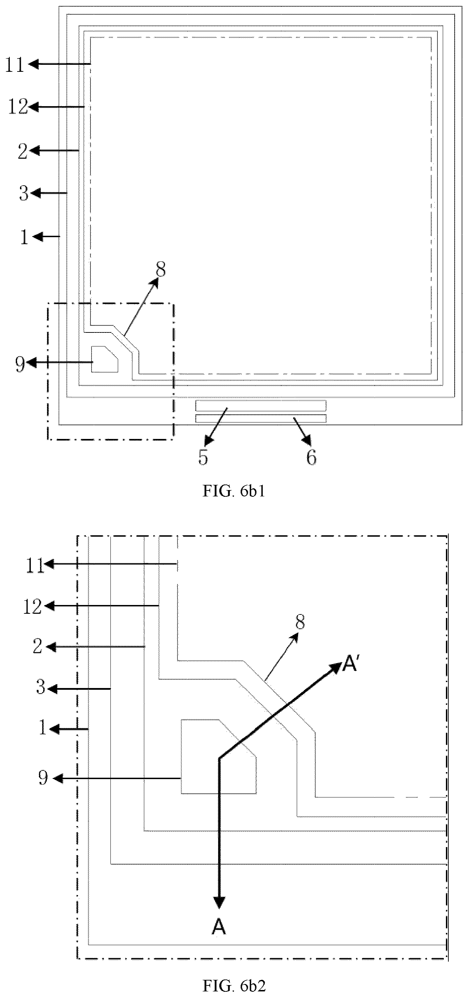

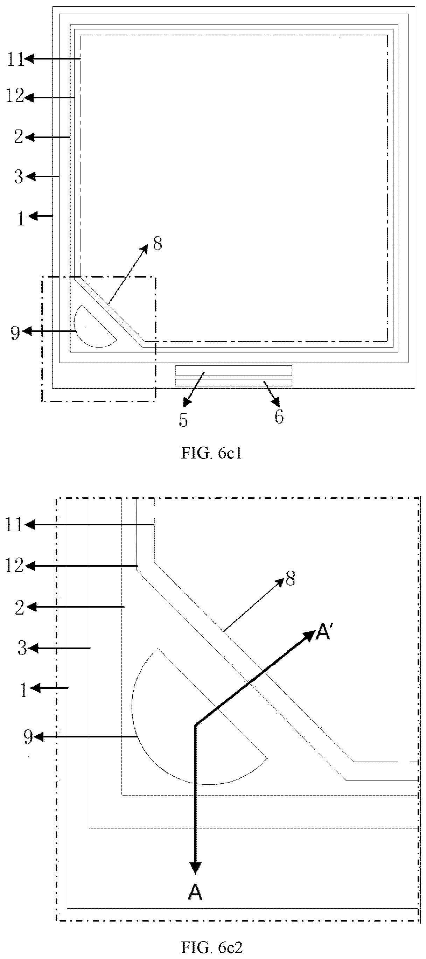

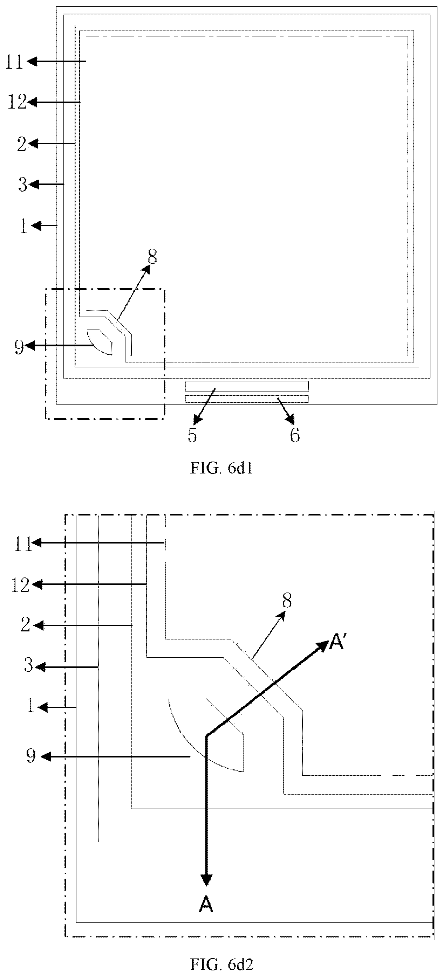

The first regional boundary 8 is a straight line or a polyline. The equidistant portion is a straight-line segment corresponding to the straight line, or a straight-line segment structure formed by a plurality of straight-line segments sequentially connected end-to-end and corresponding to the polyline (the straight-line segments sequentially connected end-to-end are substantively manifested as a polyline, which is fundamentally the same as considering a polyline segment as being formed by multiple straight-line segments connected end-to-end sequentially), and the straight-line segment structure is parallel to the polyline. It can be seen that the second regional boundary 9 is a regular or irregular closed shape including the straight-line segment or the straight-line segment structure. This can be further refined as follows: 1) the second regional boundary 9 is a polygon including the straight-line segment or the straight-line segment structure, including but not limited to a triangle (as shown in FIGS. 6a1 and 6a2) and a pentagon (as shown in FIGS. 6b1 and 6b2); or 2) the second regional boundary 9 is a closed shape including the straight-line segment and a curved segment, or including the straight-line segment structure and a curved segment, including but not limited to a semicircle (as shown in FIGS. 6c1 and 6c2) and a special sector (as shown in FIGS. 6d1 and 6d2, the special sector is composed of three straight-line segments and a curved segment).

### Embodiment 3

This embodiment provides a third feasible solution for ensuring that the minimum distance from any point on the equidistant portion to the first regional boundary 8 is equal.

The first regional boundary 8 is a mixed shape including a straight line and an arc line, or including a polyline and an arc line. The equidistant portion is a mixed segment corresponding to the mixed shape. The second regional boundary 9 is a closed shape including the mixed segment. Similarly, reference may be made to Embodiment 2 for the configuration of the structural in the second regional boundary 9 corresponding to the polyline, which will not be repeated in this embodiment. For example, as illustrated in FIGS. 7a and 7b, the line segments close to two ends of the first regional boundary 8 are straight-line segments and the line segment connecting the two straight-line segments is an arc segment, that is, the second regional boundary 9 is configured as a square with an upper right corner chamfered, so that an upper side and a right side of the second regional boundary 9 correspond to the two straight-line segments of the first regional boundary 8 respectively, and the chamfered corner of the second regional boundary 9 corresponds to the arc segment of the first regional boundary 8, thereby ensuring that the minimum distance from any point on the equidistant portion to the first regional boundary 8 is equal.

### Embodiment 4

This embodiment provides a feasible solution based on any one of Embodiments 1 to 3, further adjusting the position of the second regional boundary 9.

In a longitudinal cross-sectional view, as illustrated in FIG. 8, the second regional boundary 9 is located inside the electronic paper film 2, so that there is a spacing between the second regional boundary 9 and an edge of the electronic paper film 2, thereby preventing the electrical connection points 14 from overflowing beyond the boundary of the electronic paper film 2 due to process fluctuation. Therefore, a point in the second regional boundary 9 farthest from the first regional boundary 8 may be located 1) within the original display area 11 or on a boundary thereof (the term "original" refers to the portion that should belong to the display area 11 without reserving the vacant area; the same applies hereafter), and the schematic plan view can be referred to in FIG. 3a1, FIG. 3b1, FIG. 4a, FIG. 5b1, FIG. 5c1, FIG. 6a1, FIG. 6b1, FIG. 6d1 or FIG. 7a; or 2) within the original transition area 12 or on a boundary thereof, and the schematic plan view can be referred to in FIG. 5a1 or 5d1; or 3) within the area of the electronic paper film 2, and the schematic plan view can be referred to in FIG. 6c1.

### Embodiment 5

This embodiment provides a feasible solution based on any one of Embodiments 1 to 3, further adjusting the position of the second regional boundary 9.

As illustrated in FIGS. 9a, 9b and 10, the second regional boundary 9 is a closed shape formed based on the boundary of the electronic paper film 2, so that a part of the boundary of the electronic paper film 2 constitutes a part of the second regional boundary 9, thereby minimizing the loss of the display area 11. It should be noted that in this embodiment, the portion of the second regional boundary 9 corresponding to the arc-shaped first regional boundary may adopt the design of the corresponding portion in Embodiment 1, Embodiment 2 or Embodiment 3. However, since the remaining portion coincides with part of the boundary of the electronic paper film 2, it can only be defined by the boundary of the electronic paper film 2.

### Embodiment 6

Based on Embodiment 4 or Embodiment 5, this embodiment further defines the distances or dimensions between various structures to enhance the rationality of the afore-mentioned configurations.

Taking the configuration with a transition area 12 as an example. Since it involves dimensional ranges, this embodiment specifically explains the measurement positions for the distances to accurately determine the involved distance parameters: cross-sectional lines A and A' intersect at a center of the electrical connection point 14, and the center point of the electrical connection point 14 is determined by the following method: selecting four points on the second regional boundary 9 that are closest to the left, right, upper and lower sides; drawing two vertical straight lines passing through the left and right points, respectively, and drawing two horizontal straight lines passing through the upper and lower points, respectively, so that the two vertical straight lines and the two horizontal straight lines form a rectangle; drawing two perpendicular lines perpendicular to a length direction and a width direction of the rectangle respectively, and an intersection of the two perpendicular lines is the center point. The cross-sectional line A is perpendicular to the horizontal straight line, and the cross-sectional line A' is at an included angle of 45°with respect to the horizontal straight line. In this way, when the second regional boundary is a regular shape (excluding the non-perfect circle), the center point determined by the above method is a diagonal intersection or a center of a circle; and when the second regional boundary is an irregular shape, the center point is determined by the above method. The cross-sectional lines B and B' are set in the same way, which will not be repeated.

Based on the foregoing description, as illustrated in FIGS. 8 and 10, a minimum distance between the second regional boundary 9 and the boundary of the electronic paper film 2 is L2, where L2 satisfies 0 mm ≤ L2 ≤ 1 mm (according to a cross-sectional path set in this embodiment, not any point on the cross-sectional line A may not necessarily be at the closest position, so L2 is not shown in the figure). A minimum width of the transition area 12 is L3, where L3 satisfies 0 mm ≤ L3 ≤ 1 mm; a minimum distance between the equidistant portion of the second regional boundary 9 and the boundary of the transition area 12 is L4, where L4 satisfies 0.3 mm ≤ L4 ≤ 2 mm, and it is ensured that 0.5 mm ≤ L3+L4 ≤ 3 mm; a minimum distance between the boundary of the electronic paper film 2 and the boundary of the protective film 3 is L5, where L5 satisfies 0.5 mm ≤ L5 ≤ 2 mm. When the transition area 12 is not provided, the minimum distance between the equidistant portion of the second regional boundary 9 and the first regional boundary 8 is L1, where L1 satisfies 0.5 mm ≤ L1 ≤ 3 mm. The distance L1 (not shown in the figure) is set to isolate the electrical connection point 14 from the display area 11, preventing edge damage to the electrophoretic film 2 caused by laser cutting at the electrical connection point 14, which could otherwise lead to electronic ink entering the display area 11 during use. The distance L4 is set to isolate the electrical connection point 14 from the transition area 12, preventing unintended contact between the electrical connection point 14 and the electrode of the transition area 12, and also preventing edge damage to the electronic paper film 2 caused by laser cutting at the electrical connection point 14, which could otherwise lead to electronic ink entering the transition area 12 during use. The distances L3 and L4 are set to isolate the electrical connection point 14 from the display area 11, preventing edge damage to the electronic paper film 2 caused by laser cutting at the electrical connection point 14, which could otherwise lead to electronic ink entering the display area 11 during use. The distance L5 is set for an edge sealing adhesive 4, which bonds the edge of the protective film 3 to the thin-film transistor substrate 1 to prevent moisture from entering the electronic paper film 2.

In addition, Embodiments of the present disclosure further provide an electronic paper display, including the afore-mentioned electronic paper screen.

Embodiments of the present disclosure further provide an electronic terminal, including the afore-mentioned electronic paper display.

Those described above are only schematic embodiments of the present disclosure, and are not intended to limit the scope of the present disclosure. Any equivalent change or modification made by those skilled in the art without departing from the concept and the principles of the present disclosure should fall within the protection scope of the present disclosure.

## Claims

1. An electronic paper screen, comprising a thin-film transistor substrate, an electronic paper film and an electrical connection point, wherein the thin-film transistor substrate comprises a polygonal display area with at least one corner reserved with a vacant area;
wherein each vacant area is defined by a first regional boundary, and the electrical connection point is disposed on the electronic paper film at a position corresponding to the vacant area and configured to connect an electrode on the thin-film transistor substrate to an electrode on the electronic paper film; and
an outer contour of the electrical connection point forms a second regional boundary on a plane of the thin-film transistor substrate, a portion of the second regional boundary corresponding to the first regional boundary is an equidistant portion, and a minimum distance from any point on the equidistant portion to the first regional boundary is equal.

2. The electronic paper screen according to claim 1, wherein the first regional boundary is arc-shaped, and the equidistant portion is correspondingly configured as an arc segment.

3. The electronic paper screen according to claim 2, wherein the second regional boundary is a closed shape comprising a curved segment and the arc segment, and a curvature of the curved segment is the same as or different from that of the arc segment.

4. The electronic paper screen according to claim 2, wherein the second regional boundary is a closed shape comprising a straight-line segment and the arc segment.

5. The electronic paper screen according to claim 1, wherein the first regional boundary is a straight line or a polyline; and
the equidistant portion is a straight-line segment corresponding to the straight line, or a straight-line segment structure formed by a plurality of straight-line segments sequentially connected end-to-end and corresponding to the polyline.

6. The electronic paper screen according to claim 5, wherein the second regional boundary is a polygon comprising the straight-line segment or the straight-line segment structure.

7. The electronic paper screen according to claim 5, wherein the second regional boundary is a closed shape comprising the straight-line segment and a curved segment or comprising the straight-line segment structure and a curved segment.

8. The electronic paper screen according to claim 1, wherein the first regional boundary is a mixed shape comprising a straight line and an arc line, or comprising a polyline and an arc line; and
the equidistant portion is a mixed segment corresponding to the mixed shape, and the second regional boundary is a closed shape comprising the mixed segment.

9. The electronic paper screen according to claim 1, wherein the second regional boundary is located inside the electronic paper film, so that there is a spacing between the second regional boundary and a boundary of the electronic paper film.

10. The electronic paper screen according to claim 1, wherein the second regional boundary is a closed shape formed based on a boundary of the electronic paper film, so that a part of the boundary of the electronic paper film constitutes a part of the second regional boundary.

11. The electronic paper screen according to claim 1, wherein the minimum distance between the equidistant portion and the first regional boundary is L1, which satisfies 0.5 mm ≤ L1 ≤ 3 mm, and a minimum distance between the second regional boundary and a boundary of the electronic paper film is L2, which satisfies 0 mm ≤ L2 ≤ 1 mm.

12. The electronic paper screen according to claim 1, wherein a transition area is disposed around the display area, a minimum width of the transition area is L3, which satisfies 0 mm ≤ L3 ≤ 1 mm, a minimum distance between the second regional boundary and a boundary of the transition area is L4, which satisfies 0.3 mm ≤ L4 ≤ 2 mm, and 0.5 mm ≤ L3+L4 ≤ 3 mm.

13. The electronic paper screen according to claim 1, further comprising a protective film attached to the electronic paper film, and a minimum distance between a boundary of the electronic paper film and a boundary of the protective film is L5, which satisfies 0.5 mm ≤ L5 ≤ 2 mm.

14. An electronic paper display, comprising the electronic paper screen according to any one of claims 1 to 13.

15. An electronic terminal, comprising the electronic paper display according to claim 14.
